# EUROPÄISCHE PATENTSCHRIFT

(11) **EP 2 617 267 B1**
(45) Veröffentlichungstag und Bekanntmachung des Hinweises auf die Patenterteilung: **06.05.2015**
(21) Anmeldenummer: 11757260.2
(22) Anmeldetag: 09.09.2011
(51) Int. Cl.: H05B 41/292, H05B 41/392, B60Q 1/00

(54) **VERFAHREN ZUM BETREIBEN EINER GASENTLADUNGSLAMPE EINES KRAFTFAHRZEUGSCHEINWERFERS**
METHOD FOR OPERATING A GAS DISCHARGE LAMP OF A MOTOR VEHICLE HEADLAMP
PROCÉDÉ DE FONCTIONNEMENT D'UNE LAMPE À DÉCHARGE DE GAZ D'UN PHARE DE VÉHICULE AUTOMOBILE

(30) Priorität: 16.09.2010 DE 102010045584
(43) Veröffentlichungstag der Anmeldung: 24.07.2013
(73) Patentinhaber: Automotive Lighting Reutlingen GmbH, 72762 Reutlingen (DE)
(72) Erfinder: NEESER, Dominik, 72768 Reutlingen (DE); JOHANN, Christian, 72770 Reutlingen (DE)
(74) Vertreter: DREISS Patentanwälte PartG mbB
(86) Internationale Anmeldenummer: PCT/EP2011/065600
(87) Internationale Veröffentlichungsnummer: WO 2012/034931

(56) Entgegenhaltungen:
- WO-A1-2007/096803
- WO-A1-2008/071232
- DE-A1- 19 509 860

## Beschreibung

Die Erfindung betrifft ein Verfahren zum Betreiben einer Gasentladungslampe eines Kraftfahrzeugscheinwerfers nach dem Oberbegriff des Anspruchs 1 sowie eine Steuereinrichtung nach dem Oberbegriff des Anspruchs 8. Solche Verfahren und eine solche Steuereinrichtung sind per se aus dem Stand der Technik bekannt.

Kraftfahrzeugscheinwerfer sind im Frontbereich eines Fahrzeugs angeordnet und dienen der Ausleuchtung der Fahrbahn vor dem Fahrzeug. Die Gasentladungslampe dient dabei als Lichtquelle, deren Licht vom Scheinwerfer in Form einer gewünschten Lichtverteilung, zum Beispiel einer Abblendlichtverteilung oder Fernlichtverteilung, in das Vorfeld des Scheinwerfers und insbesondere auf die Fahrbahn verteilt wird. Gasentladungslampen weisen einen mit Gas gefüllten Glaskolben auf, in dem sich wenigstens zwei Elektroden befinden. Durch Zünden einer Gasentladung wird zwischen den Elektroden ein Licht emittierender Lichtbogen erzeugt, der durch eine kontinuierliche Nachlieferung elektrischer Leistung zu den Elektroden aufrechterhalten wird.

Die Steuerung der Zufuhr der elektrischen Leistung erfolgt über eine Steuervorrichtung, zum Beispiel ein Steuergerät. Dabei wird die Gasentladungslampe in einer ersten Betriebsart mit vergleichsweise höherer Leistung und einer Wechselspannung betrieben. Die höhere Leistung entspricht dabei zum Beispiel der Nennleistung der Gasentladungslampe. Diese Leistung wird von der Steuervorrichtung gesteuert und übertragen. Die Steuerung und Übertragung geht mit einer Verlustleistung einher, die in der Steuervorrichtung als Wärme frei wird und die zu einer Eigenerwärmung und damit zu einer thermischen Belastung der Steuervorrichtung führt. Diese thermischen Belastungen addieren sich zu einer aus der Umgebung der Steuervorrichtung resultierenden thermischen Belastung der Steuervorrichtung. Die Steuervorrichtung ist zum Beispiel im Motorraum oder im Scheinwerfer und damit in einer Umgebung angeordnet, in der Temperaturen von mehr als 100 °Celsius herrschen können.

Thermische Belastungen können, wenn sie ein normales Maß überschreiten, die Lebensdauer der Steuervorrichtung beeinträchtigen und im Extremfall zu einem vorzeitigen Ausfall führen. Um dies zu vermeiden, wird die Gasentladungslampe bei dem eingangs genannten Stand der Technik in einer zweiten Betriebsart zeitlich begrenzt mit vergleichsweise geringerer Leistung und Gleichspannung betrieben. Die zweite Betriebsart stellt insofern in Bezug auf die Steuervorrichtung einen Bauteil-Schutzbetrieb dar.

Durch den Betrieb mit geringerer Leistung wird die Eigenerwärmung reduziert. Im Wechselspannungsbetrieb lässt sich die Leistung dabei nur vergleichsweise geringfügig verringern. Eine zu weitgehende Verringerung führt im Wechselstrombetrieb zu unerwünschten Instabilitäten des Lichtbogens, die zu einem Erlöschen des Lichtbogens führen können.

Im Gleichstrombetrieb lässt sich die Leistung dagegen weitergehend verringern, ohne dafür die genannten Instabilitäten in Kauf nehmen zu müssen. Für Gasentladungslampen mit einer Nennleistung von 25 Watt hat sich zum Beispiel gezeigt, dass sich die Leistung im Wechselspannungsbetrieb auf ca. 21 Watt und im Gleichspannungsbetrieb auf ca. 18 Watt verringern lässt, ohne dass Instabilitäten des Lichtbogens auftreten. Aus der stärkeren Verringerung der Leistung im Gleichstrombetrieb ergibt sich ein größeres Potenzial zur Begrenzung der Eigenerwärmung der Steuereinrichtung.

Der Wechsel der ersten Betriebsart zur zweiten Betriebsart erfolgt üblicherweise in Abhängigkeit von einer Steuergeräteinnentemperatur und/oder von einer Verlustleistung der Steuereinrichtung, wobei äußere Einflüsse, wie beispielsweise eine aktuelle Umgebungstemperatur und eine aktuelle Bordnetzspannung berücksichtigt werden können.

Es hat sich gezeigt, dass Gasentladungslampen, die häufig im Gleichstrombetrieb betrieben werden, mit einer größeren Wahrscheinlichkeit ausfallen als Gasentladungslampen die weniger häufig im Gleichstrombetrieb betrieben werden. Der Schutz vor einer thermischen Überlastung der Steuervorrichtung scheint daher beim Stand der Technik mit einer Vergrößerung des Ausfallrisikos von Gasentladungslampen einherzugehen.

Vor diesem Hintergrund besteht die Aufgabe der vorliegenden Erfindung darin, das bekannte Verfahren und die bekannte Steuereinrichtung dahingehend zu verbessern, dass der Schutz der Steuervorrichtung vor einer thermischen Überlastung weiter gewährleistet werden kann und dass dabei jedoch gleichzeitig ein erhöhtes Ausfallrisiko der Gasentladungslampen verringert wird.

Diese Aufgabe wird jeweils mit den Merkmalen der unabhängigen Ansprüche gelöst. Die Erfindung zeichnet sich demnach dadurch aus, dass eine Polarität der Gleichspannung bei einem Wechsel von der ersten zur zweiten Betriebsart in Abhängigkeit von der Polarität der Gleichspannung in wenigstens einer vorhergehenden Betriebsphase der zweiten Betriebsart vorbestimmt wird.

Die Erfindung basiert auf der Erkenntnis, dass der bekannte Gleichstrombetrieb zu einem ungleichmäßigen Abbrand der Elektroden führen kann, der die Ausfallwahrscheinlichkeit erhöht.

Der Erfindung liegt die Idee zu Grunde, die Polarität der an die Elektroden in einer Betriebsphase, in der die Gasentladungslampe in der zweiten Betriebsart mit einer Gleichspannung betrieben wird, jeweils so vorzugeben, dass sich zumindest über mehrere Betriebsphasen der zweiten Betriebsart hinweg eine im Wesentlichen zeitlich symmetrische Verteilung der Gleichspannungspolaritäten an den Elektroden der Gasentladungslampe ergibt.

Durch die symmetrische Verteilung der Gleichspannungspolaritäten wird ein gleichmäßigerer Abbrand der Elektroden erreicht, so dass eine Verschleißgrenze, ab der mit einem Ausfall gerechnet werden muss, bei der Erfindung erst vorteilhaft später erreicht wird. Dadurch kann die zum Schutz der Steuervorrichtung dienende zweite Betriebsart beibehalten werden, ohne dafür eine höhere Ausfallwahrscheinlichkeit der Gasentladungslampe in Kauf nehmen zu müssen.

Das erfindungsgemäße Verfahren benötigt dazu in der Steuereinrichtung einen Logikteil und einen Permanentspeicher (beispielsweise einen Mikrocontroller mit integriertem Daten-EEPROM). Durch den Permanentspeicher wird eine Historie der Polarität mindestens der letzten Phase im Gleichspannungsmodus auch nach einem Power-On Reset der Steuereinrichtung abgespeichert und kann durch die in der Steuereinrichtung integrierte Logik verarbeitet werden. Durch ein Umkehren der Polarität in einer nachfolgenden Gleichspannungs-Betriebsphase kann über die komplette Lebensdauer der Lampe ein im Wesentlichen gleichförmiger Elektrodenabbrand bewirkt werden. Ein stabiler Lichtbetrieb kann trotz reduzierter Leistung somit für die gesamte vorgesehene Lebensdauer der Gasentladungslampe gewährleistet werden.

Im Rahmen einer bevorzugten ersten Ausgestaltung des Verfahrens wird die jeweilige Polarität der Gleichspannung im Vergleich zur Polarität in der vorhergehenden Gleichspannungs-Betriebsphase (der zweiten Betriebsart) zu Beginn jeder neuen Betriebsphase der zweiten Betriebsart gewechselt. Hierbei wird jeweils die entsprechende Polarität, die in einer zweiten Betriebsart verwendet wird, im Permanentspeicher abgespeichert. Bei der nächsten Anforderung für die zweite Betriebsart wählt die in der Steuereinrichtung integrierte Logik anhand der abgespeicherten Polarität die entgegengesetzte Polarität zum Betreiben der Gasentladungslampe und überschreibt die entsprechende Information im Permanentspeicher mit der aktuellen Polarität. Dieses Verfahren zeichnet sich durch die Notwendigkeit eines sehr kleinen Permanentspeichers aus, wobei ein Speicherelement von 1 Bit ausreichend ist.

In einer alternativen zweiten Ausgestaltung des Verfahrens wird eine zeitliche Dauer jeder neuen Betriebsphase in der zweiten Betriebsart ermittelt, und es wird die jeweilige Polarität der Gleichspannung über mehrere Betriebsphasen der zweiten Betriebsart hinweg symmetrisch verteilt. Diese Ausgestaltung setzt das Abspeichem der tatsächlichen Dauer einer Betriebsphase der zweiten Betriebsart und der dabei anliegenden Polarität mit geeigneter zeitlicher Auflösung) voraus. Dies kann bspw. in der Logik so realisiert werden, dass ein Zählerstand beim Anliegen einer ersten Polarität regelmäßig vergrößert und beim Anliegen einer zweiten Polarität regelmäßig verringert wird, wobei die Polarität zu Beginn einer Gleichspannungs-Betriebsphase jeweils so vorgegeben wird, dass sich der Absolutbetrag des Zählerstandes verringert.

Bei kurzen Gleichspannungs-Betriebsphasen ist dabei möglich, dass die Gasentladungslampe während mehrerer Gleichspannungs-Betriebsphasen hintereinander mit der gleichen Polarität an den Elektroden betrieben wird, zum Beispiel um einen großen Zählerstand, der sich bei einer langen Gleichspannungs-Betriebsphase ergeben hat, sukzessive über mehrere folgende Gleichspannungs-Betriebsphasen zu verringern. So ergibt sich im Laufe der Zeit ein alternierender Verlauf der Polarität um den Nullpunkt oder um einen Basiswert des Zählerstandes. Es kann damit über mehrere Betriebsphasen in der zweiten Betriebsart eine genaue symmetrische Verteilung der Polarität erreicht werden. Die Polarität einer aktuellen Phase in der zweiten Betriebsart wird jeweils nach dem Kriterium ausgewählt, einen ausgeglichenen, symmetrischen Betrieb mit positiver und negativer Polarität zu erreichen. Dieses Verfahren ist somit vorteilhafterweise im Wesentlichen unabhängig von der zeitlichen Verteilung externer Ereignisse, die eine Phase in der zweiten Betriebsart auslösen.

Bevorzugt ist auch, dass eine zeitliche Dauer der Betriebsphase in der zweiten Betriebsart überwacht wird, wobei bei einem Überschreiten einer als maximal definierten Betriebsdauer die jeweilige Polarität der Gleichspannung gewechselt wird. Dadurch wird ein einseitiger Elektrodenverschleiß (Elektrodenabbrand) in der Gasentladungslampe bei lange anliegender gleicher Polarität in einer einzigen Betriebsphase in der zweiten Betriebsart verhindert. Die zeitliche Dauer ist im Wesentlichen von der Konstruktion der Gasentladungslampe, dem Material der Elektroden und der aktuellen Bordnetzspannung bestimmt, so dass ein zeitbedingter Wechsel der Polarität dabei nach einigen Minuten, beispielsweise 5 Minuten, erfolgen kann. Die zeitliche Überwachung der Betriebsphasen mit gleichmäßig angelegter Polarität kann in beiden zuvor genannten Ausgestaltungen integriert werden.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ein Ausführungsbeispiel der Erfindung ist in den Zeichnungen dargestellt und wird in der nachfolgenden Beschreibung näher erläutert. Dabei zeigen, jeweils in schematischer Form:
Fig. 1 eine Funktionsblockdarstellung einer Gasentladungslampe mit zu ihrem Betrieb erforderlichen Steuervorrichtungs-Funktionen;
Fig. 2 eine Funktionsblockdarstellung eines Steuergeräts aus der Figur 1;
Fig. 3 ein Flussdiagramm mit einem Ablauf eines ersten Ausführungsbeispiels des erfindungsgemäßen Verfahrens;
Fig. 4 eine zeitabhängige Signaldarstellung zum Ablauf des ersten Ausführungsbeispiels aus Figur 3;
Fig. 5 ein Flussdiagramm mit einem Ablauf eines zweiten Ausführungsbeispiels des erfindungsgemäßen Verfahrens;
Fig. 6 ein Flussdiagramm mit einem Teilablauf eines dritten Ausführungsbeispiels des erfindungsgemäßen Verfahrens;
Fig. 7 eine zeitlich gerasterte Darstellung einer an die Gasentladungslampe aus Figur 1 angelegten Polarität zur Erläuterung des Ablaufs des zweiten und dritten Ausführungsbeispiels aus Figur 5 und 6;
Fig. 8 eine Signaldarstellung zum Ablauf des zweiten Ausführungsbeispiels aus Figur 5; und
Fig. 9 eine Signaldarstellung zum Ablauf des dritten Ausführungsbeispiels.

Gleiche Bezugszeichen verweisen dabei in den verschiedenen Figuren jeweils auf gleiche oder zumindest ihrer Funktion nach gleiche Elemente.

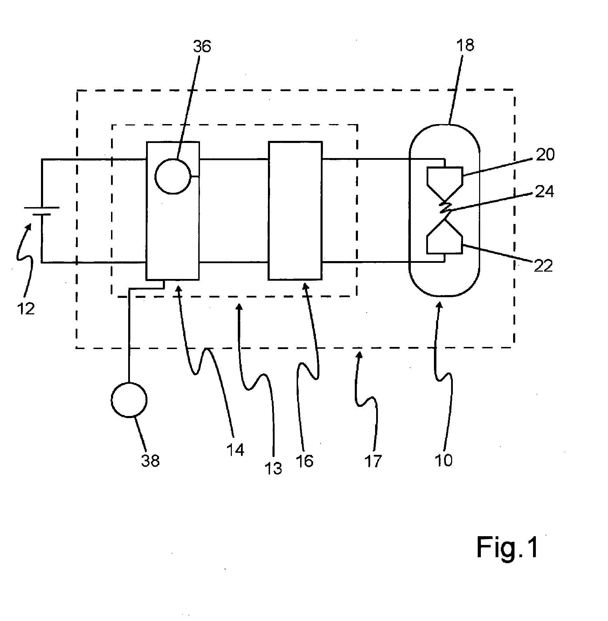

Die Figur 1 zeigt eine Gasentladungslampe 10 mit einem Speicher 12 elektrischer Energie und einer Steuereinrichtung. Dabei wird hier unter der Steuereinrichtung die bauliche Einheit verstanden, mit der der Betrieb der Gasentladungslampe 10 gesteuert wird. Die Steuereinrichtung kann dabei als separates Steuergerät 14 realisiert sein, das über ein separates Zündgerät 16 mit der Gasentladungslampe 10 verbunden ist. In einer alternativen Ausgestaltung ist die Steuereinrichtung eine bauliche integrale Einheit aus einem Steuergerät 14 und einem Zündgerät 16 in Form eines Vorschaltgeräts 13. Möglich ist auch, dass die Steuereinrichtung als komplettes Modul 17 als bauliche integrale Einheit mit einem Steuergerät 14, einem Zündgerät 16 und einer Gasentladungslampe 10 realisiert ist.

Im Inneren der Steuereinrichtung ist ein erster Temperatursensor 36 zum Ermitteln einer Innentemperatur der Steuereinrichtung angeordnet. Je nach Ausgestaltung ist der erste Temperatursensor 36 demnach im Inneren des Steuergerätes 14, der baulichen Einheit 13 oder des kompletten Moduls 17 angeordnet. Fig. 1 zeigt eine Ausgestaltung, bei der der erste Temperatursensor 36 im Steuergerät 14 angeordnet ist.

Außerhalb der Steuereinrichtung ist ein zweiter Temperatursensor 38 angeordnet, über den die Umgebungstemperatur der Steuereinrichtung 13 erfasst werden kann. Die Temperatursensoren 36 und 38 können dabei beispielsweise Temperatur-abhängige Widerstände oder Thermoelemente umfassen.

Die Gasentladungslampe 10 weist einen mit Gas gefüllten Glaskolben 18 und wenigstens zwei Elektroden 20, 22 auf. Beim Betrieb der Gasentladungslampe 10 wird eine als Lichtbogen 24 stabil Licht emittierende Gasentladung zwischen den Elektroden 20 und 22 gezündet und durch Nachlieferung elektrischer Energie aufrechterhalten.

Die elektrische Energie wird dem Speicher 12 entnommen, der in einer Ausgestaltung ein Energiespeicher eines Bordnetzes eines Kraftfahrzeuges, insbesondere eine Fahrzeugbatterie ist.

Das Zündgerät 16 stellt eine Zündspannung zum Zünden der Gasentladungslampe 10 bereit. Das Steuergerät 14 dient zum Bereitstellen einer Eingangsspannung für das Zündgerät 16 und einer Betriebsspannung für einen Betrieb der Gasentladungslampe 10. Diese Spannungen werden durch das Steuergerät 14 aus der Bordnetzspannung des Kraftfahrzeugs generiert.

Das Steuergerät 14 betreibt und überwacht die Gasentladungslampe 10, es generiert aus der Bordnetzspannung eine Zwischenspannung (etwa 1.000 Volt) als Eingangsspannung des Zündgeräts 16, die von diesem dann in die Zündspannung (etwa 25.000 Volt) hoch transformiert wird, und es generiert eine Betriebsspannung für den Dauerbetrieb der Gasentladungslampe nach dem Zünden des Lichtbogens 24.

Außerdem veranlasst das Steuergerät 14 das Zündgerät 16, den Lichtbogen in der Gasentladungslampe 10 zu zünden, es steuert die Stromeinspeisung in der Anlaufphase bei kalter Gasentladungslampe 10, und es bewirkt eine leistungsgeregelte Versorgung der Gasentladungslampe 10 im stationären Betrieb. Das Steuergerät 14 ist darüber hinaus bevorzugt dazu eingerichtet, Auswirkungen von Schwankungen der Bordnetzspannung bei der Steuerung der Gasentladungslampe 10 weitgehend auszuregeln. Erlischt die Gasentladungslampe 10 zum Beispiel wegen eines extremen Spannungseinbruchs im Bordnetz, veranlasst das Steuergerät 14 das Zündgerät 16 automatisch, die Gasentladungslampe 10 sofort wieder zu zünden.

Beim Übergang vom ausgeschalteten Zustand ohne Lichtbogen 24 in einen stabilen Licht erzeugenden Zustand sind mehrere Phasen unterscheidbar, die als Zündung, Übernahme und Anlauf bezeichnet werden. Daran schließt sich der Normalbetrieb mit stabil brennendem Lichtbogen 24 an.

Für die Zündung wird zunächst ein Zündspannungsimpuls an die Elektroden angelegt. Der Zündspannungsimpuls ist sehr kurz und führt zu einer Ionisierung von Gasteilchen im elektrischen Feld zwischen den Elektroden. Die Höhe der impulsförmigen Zündspannung liegt bei handelsüblichen Gasentladungslampen für Kraftfahrzeugscheinwerfer zwischen 20 und 30 Kilovolt.

In einer als Übernahme bezeichneten Phase wird anschließend eine in einem Booster-Kondensator gespeicherte Energie dazu verwendet, die ionisierten Gasteilchen so stark zu beschleunigen, dass sich durch Stoßionisationen ein lawinenartiger Ladungsdurchbruch zwischen den Elektroden einstellt, der den Lichtbogen zündet und aufrechterhält. Dabei nimmt die Spannung des vorher auf ca. 400 Volt aufgeladenen Booster-Kondensators auf eine sich im stabilen Betrieb einstellende Brennspannung ab. Für Hg-haltige Lampen liegt diese bei ca. 80 Volt (Hg = Quecksilber). Hg-freie Lampen werden mit einer Brennspannung von 43 Volt betrieben. Allgemein gilt, dass die Brennspannung je nach Ausführung der Lampe zwischen 30 Volt und 120 Volt liegen kann. Die Übernahmephase ist zum Beispiel einige hundert Mikrosekunden lang.

Im Anschluss an die Übernahme erfolgt ein Anlauf der Gasentladungslampe mit einem vorübergehenden Gleichstrombetrieb, der dem schnellen Aufheizen der Elektroden dient Eine typische Länge einer Gleichstromphase liegt zwischen 20 und 80 Millisekunden. An eine erste Gleichstromphase schließt sich in der Regel eine zweite Gleichstromphase gleicher Länge mit umgekehrter Polarität an.

Im Anschluss an den Gleichstrombetrieb wird die Gasentladungslampe mit einer Wechselspannung mit einer Frequenz von 250 Hz bis 800 Hz, insbesondere ca. 400 Hz und einem von der Ausführung der Lampe abhängigen Wert der Brennspannung zwischen den beiden Elektroden betrieben, der zwischen 30 und 120 Volt liegt. Dabei wird die Lampe zunächst mit einer im Vergleich zu ihrer Nennleistung erhöhten elektrischen Leistung betrieben. Der Zeitraum des Betriebs mit erhöhter elektrischer Leistung wird noch zum Anlauf gerechnet und dient zur beschleunigten Aufheizung der Elektroden 20, 22.

Im Anschluss an den Anlauf wird die Gasentladungslampe 10 weiter mit einer Wechselspannung der genannten Frequenzen und Spannungen betrieben, wobei der Betrieb jedoch nicht mehr mit einer im Vergleich zur Nennleistung erhöhten Leistung erfolgt. Der Betrieb mit Wechselspannung dient dabei einer Begrenzung eines Elektrodenabbrandes. Dieser mit einer Wechselspannung und der Nennleistung erfolgende Betrieb stellt die erste Betriebsart dar.

Das Steuergerät 14 ist darüber hinaus bevorzugt dazu eingerichtet, die Gasentladungslampe 10 zum Schutz vor einer eigenen thermischen Belastung (des Steuergerätes) vorübergehend mit verringerter Leistung in einer zweiten Betriebsart (Bauteil-Schutzbetrieb) zu betreiben, um die Temperatur im Steuergerät 14 zu senken oder zumindest einen Temperaturanstieg zu begrenzen.

Auch mit verringerter Leistung muss die Steuereinrichtung einen sicheren bzw. stabilen Betrieb des Lichtbogens 24 in der Gasentladungslampe 10 gewährleisten und insbesondere einen Abriss des Lichtbogens 24 verhindern. Aus diesem Grund wird die Gasentladungslampe 10 nach dem Wechsel der Betriebsart vom Normalbetrieb in die leistungsreduzierte zweite Betriebsart mit einer Gleichspannung betrieben (Gleichspannungsmodus). Dieser Gleichspannungsmodus führt zu einem stabilen Betrieb des Lichtbogens 24 auch bei reduzierter Leistung. Dabei ist eine Absenkung der Leistung um etwa 25% möglich.

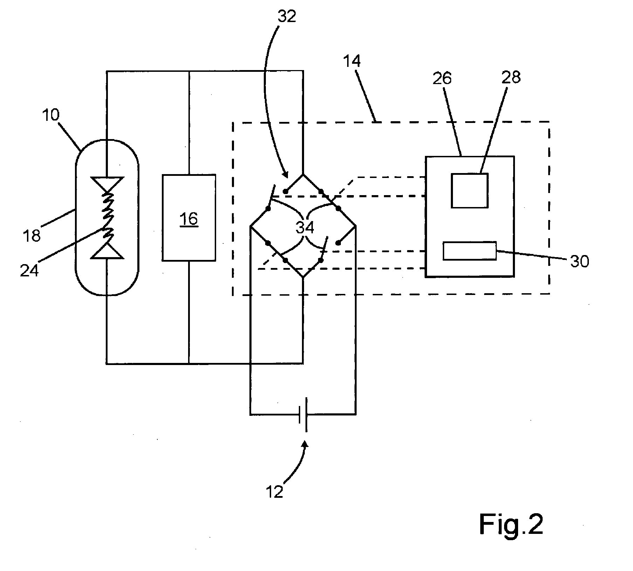

Figur 2 zeigt insbesondere das Steuergerät 14 in einer detaillierten Darstellung. Das Steuergerät 14 weist eine Computereinrichtung 26 mit einem Mikroprozessor 28 und einem elektronischen Speicherelement 30 auf, das bevorzugt als Permanentspeicher realisiert ist. Der Permanentspeicher 30 ist ein Speicher, dessen gespeicherte Daten auch ohne dauerhafte Energiezufuhr erhalten bleiben. Das Steuergerät 14 ist dazu eingerichtet, ein Verfahren zum Betreiben und Zünden der Gasentladungslampe 10 zu steuern.

Für den Betrieb der Gasentladungslampe 10 in der leistungsreduzierten zweiten Betriebsart (bei Gleichspannung) weist die Steuereinrichtung 14 zusätzlich eine Umschalteinrichtung 32 zum Umschalten einer anlegbaren Polarität an die Elektroden 20 und 22 der Gasentladungslampe 10 auf.

Die Umschalteinrichtung 32 umfasst vier Schalterelemente 34, die über die Computereinrichtung 26 mit Hilfe von logischen Entscheidungen, die im Mikroprozessor 28 getroffen werden, geschaltet werden können. Durch paarweise erfolgendes Umschalten der Schalterelemente 34 kann die entsprechende Polarität an den Elektroden 20 und 22 gewechselt werden. Dabei werden jeweils die in der Fig. 2 einander gegenüber liegenden Schalter in die gleiche Schaltstellung gebracht, wobei einander benachbarte Schalter jeweils synchron in zueinander komplementäre Schaltstellungen geschaltet werden.

Nachfolgend werden Abläufe von drei Ausführungsbeispielen des erfindungsgemäßen Verfahrens zum Umschalten der Polarität an den Elektroden 20 und 22 der Gasentladungslampe 10 im leistungsreduzierten Gleichstrombetrieb erläutert. Als Ausgangspunkt wird jeweils ein aktueller Betrieb der Gasentladungslampe 10 im Normalbetrieb, also mit Wechselspannung, angenommen. Im Steuergerät 14 werden im Normalbetrieb laufend Kriterien zum Wechsel vom Normalbetrieb auf die leistungsreduzierte zweite Betriebsart ermittelt. Dies kann beispielsweise über Signale des Temperatursensors 36 erfolgen, mit denen die Innentemperatur des Steuergeräts 14 ermittelt wird. Alternativ oder ergänzend kann dies über eine Ermittlung einer Verlustleistung der Steuereinrichtung 13 erfolgen. Die Verlustleistung lässt sich beispielsweise aus der Innentemperatur und Kennlinien ermitteln, die zum Beispiel eine Abhängigkeit der Verlustleistung von im Steuergerät 14 bekannten Betriebsparametern wie Strom und Spannung an den Elektroden 20, 22 der Gasentladungslampe 10, beziehungsweise an entsprechenden Ausgängen oder Messpunkten der Steuereinrichtung, abbilden.

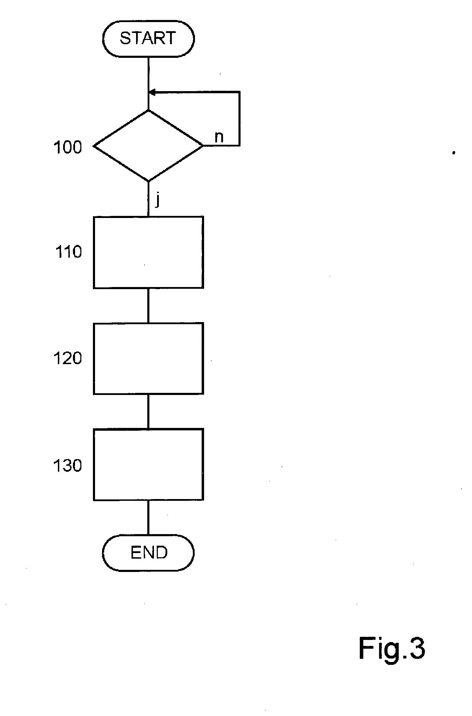

Figur 3 zeigt ein Flussdiagramm als erstes Ausführungsbeispiels eines erfindungsgemäßen Verfahrens. In der Abfrage 100 wird überprüft, ob die Kriterien für eine Umschaltung in einen Bauteil-Schutzbetrieb mit reduzierter Leistung erfüllt sind. Dazu werden in einer Ausgestaltung ermittelte Werte der Temperatur und/oder der Verlustleistung mit vorbestimmten Schwellenwerten verglichen. Äußere Einflussfaktoren, wie beispielsweise eine über den Temperatursensor 38 ermittelbare Umgebungstemperatur der Steuereinrichtung 13 und/oder eine aktuelle Bordnetzspannung können dabei berücksichtigt werden.

Die Bordnetzspannung ist entweder im Steuergerät 14 bereits bekannt, oder sie kann beispielsweise über ein Bussystem des Kraftfahrzeuges ermittelt werden, dass mehrere Steuergeräte und oder Sensoren so verbindet, dass ein Datenaustausch möglich ist. Ein Beispiel eines solchen Bussystems ist der bekannte CAN-Bus. Bei geringer Bordnetzspannung wird das Steuergerät zum Beispiel höhere Ströme bei der Regelung der Lampenleistung einstellen, was die Eigenerwärmung des Steuergerätes vergrößert. Wird ein Überschreiten der Grenzwerte erkannt, wird im Steuergerät 14 auf die leistungsreduzierte Betriebsart im Gleichspannungsmodus umgeschaltet.

Dazu wird im Schritt 110 aus dem Permanentspeicher ein Kennzeichen für die Polarität ausgelesen, die beispielsweise an der Elektrode 20 in der letzten Betriebsphase im Gleichspannungsmodus anlag. Der Permanentspeicher kann hier auf ein einziges Bit beschränkt sein. Anschließend werden im Schritt 120 die Elektroden 20 und 22 der Gasentladungslampe 10 mit der umgekehrten Polarität und mit entsprechend reduzierter Leistung mit Gleichspannung angesteuert. Im Schritt 130 erfolgt ein Speichern eines Kennzeichens einer aktuell an der Elektrode 20 anliegenden Polarität im Permanentspeicher 30.

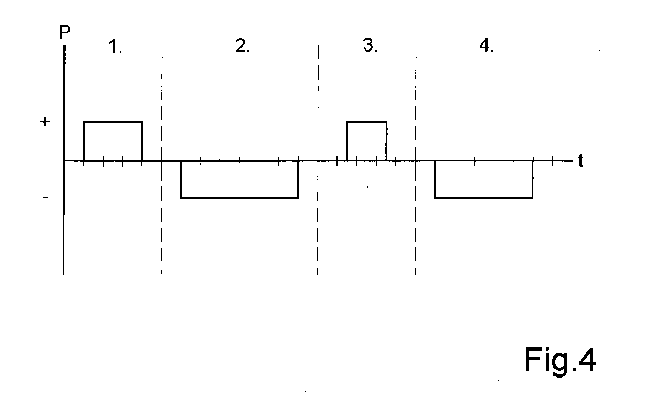

Figur 4 zeigt eine jeweils angelegte Polarität P (+ / -) an der Elektrode 20 über vier zeitlich unterschiedlich lange Betriebsphasen in der leistungsreduzierten zweiten Betriebsart im Gleichspannungsmodus. Betriebsphasen im Normalbetrieb mit Wechselspannung sind in Figur 4 nicht dargestellt. Die Betriebsphasen sind über der Zeit t aufgetragen. Figur 4 zeigt, dass die Polarität P bei jeder neuen Betriebsphase wechselt und sich zumindest über mehrere Betriebsphasen im Gleichspannungsmodus hinweg eine näherungsweise zeitlich symmetrische Verteilung der Gleichspannungspolaritäten an den Elektroden 20 und 22 der Gasentladungslampe 10 ergibt. Dadurch wird ein ungleichmäßiger Abbrand der Elektroden 20 und 22 verhindert.

Während des im Gleichspannungsmodus erfolgenden Betriebs wird vom Steuergerät 14 wiederholt überprüft, ob Kriterien für eine Rückkehr in den Normalbetrieb der ersten Betriebsart der Gasentladungslampe 10 wieder erfüllt sind. Ist dies der Fall, wird auf Normalbetrieb mit Wechselspannung umgeschaltet, und das erfindungsgemäße Verfahren wird beendet.

Ein bezüglich der positiven und negativen Polaritäten vollständig ausgeglichener Gleichstrombetrieb wird durch diese Ausgestaltung noch nicht gewährleistet, da die zeitliche Dauer der zweiten Betriebsart schwanken kann. Wie aus dem Beispiel der Figur 4 ersichtlich ist, kann die Zeitdauer, über der eine negative Polarität an der Elektrode 20 anliegt, wesentlich größer als die Zeitdauer einer an der Elektrode 20 anliegenden positiven Polarität sein. Das Verhältnis von positiver und negativer Polarität richtet sich nach der zeitlichen Verteilung externer Ereignisse, die den Betrieb in der zweiten Betriebsart auslösen.

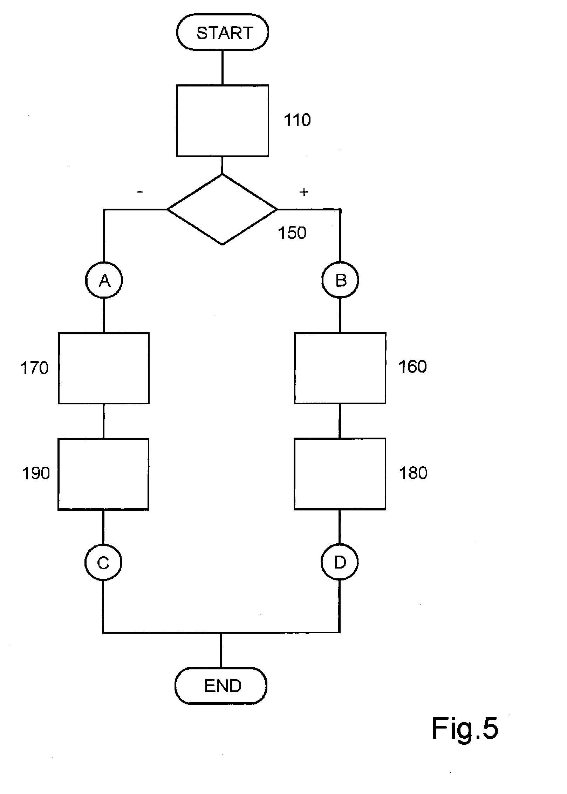

Figur 5 zeigt ein Flussdiagramm mit einem Ablauf eines zweiten, verbesserten Ausführungsbeispiels des erfindungsgemäßen Verfahrens. Die zweite Ausgestaltung zeichnet sich dadurch aus, dass die Zeitdauer des Betriebs im Gleichspannungsmodus zusammen mit der jeweils an den Elektroden 20 und 22 anliegenden Polarität erfasst und ausgewertet wird. Das Ergebnis der Auswertung legt die Polarität für die folgenden Betriebsphase im Gleichstrommodus fest.

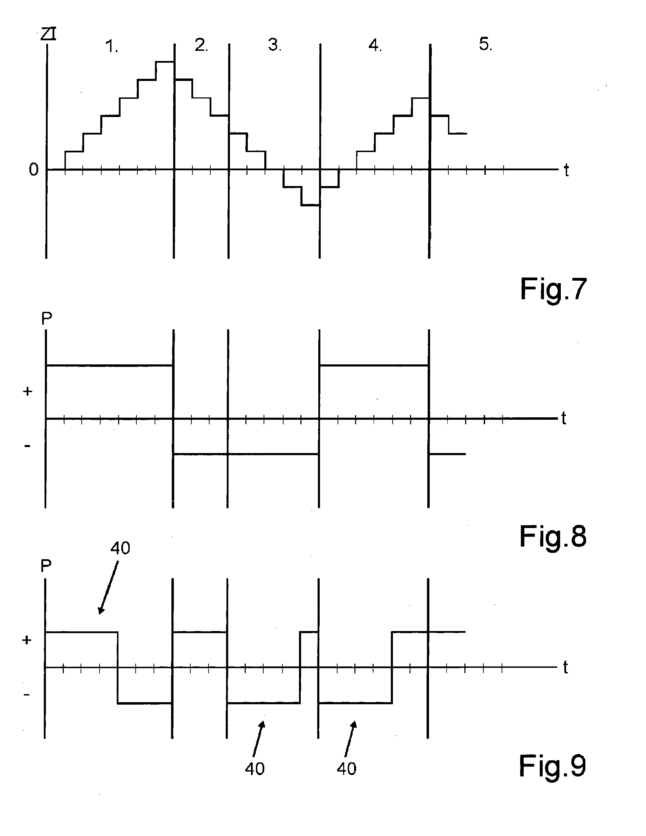

Figur 7 zeigt beispielhaft - beginnend von einer Nulllinie - einen Verlauf eines Zählerstandes ZI bei fünf Betriebsphasen im Gleichstrombetrieb, wobei dazwischen liegende Wechselspannungs-Normalbetriebsphasen jeweils nicht dargestellt sind. Bei positiver Polarität P an der Elektrode 20 wird hoch gezählt. Bei negativer Polarität P an der Elektrode 20 wird herunter gezählt. Die jeweils angelegte Polarität P an der beispielhaft gewählten Elektrode 20 der Gasentladungslampe 10 zeigt Figur 8.

In der Abfrage 100 in Figur 5 wird, so wie es unter Bezug auf die Fig. 3 erläutert wurde, überprüft, ob vordefinierte Grenzwerte überschritten werden, die ein Überschreiten der Innentemperatur und/oder der Verlustleistung des Steuergeräts 14 kennzeichnen. Es gelten auch hier die Randbedingungen der ersten Ausgestaltung aus der Fig. 3. Wird ein Überschreiten der Grenzwerte erkannt, wird im Steuergerät 14 auf die leistungsreduzierte zweite Betriebsart im Gleichspannungsmodus umgeschaltet.

Dazu wird in der Abfrage 150 eine Richtung einer Abweichung des Zählerstandes aus Fig. 7 von der Nulllinie ermittelt. Liegt die Abweichung in Figur 7 oberhalb der Nulllinie, wird in Schritt 160 an die Elektrode 20 eine negative Polarität angelegt, um auf Null herunter zu zählen. Anderenfalls wird im Schritt 170 eine positive Polarität an die Elektrode 20 angelegt. In den Schritten 180, 190 wird der Zählerstand jeweils der Polarität und dem Zählrhythmus entsprechend aktualisiert. Daraus ergibt sich über der Zeit t nach weiteren Betriebsphasen im Gleichspannungsmodus ein alternierender Verlauf um die Nulllinie.

Insbesondere beim Übergang von der zweiten zur dritten Betriebsphase (vgl. Figur 7 und 8) zeigt sich der Vorteil des zweiten Ausführungsbeispiels. In der zweiten Betriebsphase ist negative Polarität an der Elektrode 20 angelegt (vgl. Figur 8), der Zählerstand wird herunter gezählt. Zum Beginn der dritten Betriebsphase liegt der Zählerstand noch oberhalb der Nulllinie. Als Folge wird die Gasentladungslampe 10 bei dieser Ausgestaltung in der dritten Betriebsphase des Bauteil-Schutzbetriebs erneut mit negativer Polarität an der Elektrode 20 betrieben, wie es auch bereits in der zweiten Betriebsphase der Fall war. Erst nachdem in Figur 7 die Nulllinie unterschritten wurde, wird zu Beginn der vierten Betriebsphase die Elektrode 20 wieder mit positiver Polarität betrieben.

Figur 8 zeigt eine im Wesentlichen zeitlich symmetrische Verteilung der Gleichspannungspolaritäten an der Elektrode 20 der Gasentladungslampe 10, bei dem ein ungleichmäßiger Abbrand der Elektroden 20 und 22 besser verhindert wird, als im ersten Ausführungsbeispiel des Verfahrens. Die Betriebsphasen mit positiver und negativer Polarität haben in der Summe über mehrere Betriebsphasen hinweg eine zeitlich annähernd gleiche Dauer. Während des gesamten Verfahrens im Gleichspannungsmodus wird vom Steuergerät 14 überprüft, ob die Kriterien zum Normalbetrieb der Gasentladungslampe 10 wieder gegeben sind. Ist dies der Fall, wird auf Normalbetrieb mit Wechselspannung umgeschaltet und das erfindungsgemäße Verfahren beendet.

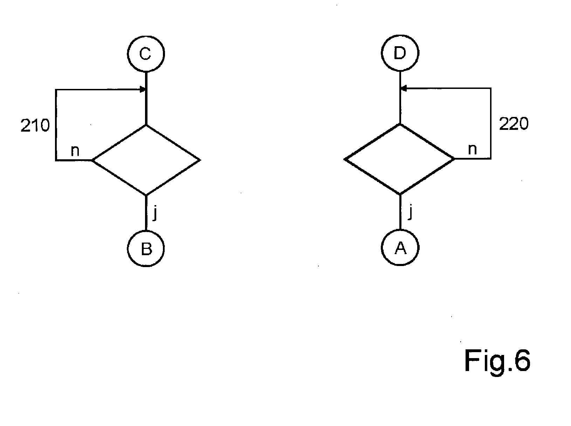

Figur 6 zeigt ein Flussdiagramm eines Teils eines dritten Ausführungsbeispiels des erfindungsgemäßen Verfahrens, wobei der Ablauf von Figur 6 für einen Gesamtablauf des dritten Ausführungsbeispiels mit dem Ablauf von Figur 5 kombiniert werden muss. Das dritte Ausführungsbeispiel stellt damit eine mögliche Weiterentwicklung des zweiten Ausführungsbeispiels dar. Es zeichnet sich besonders dadurch aus, dass zu den Merkmalen des zweiten Ausführungsbeispiels eine bereits verstrichene Zeitdauer einer noch andauernden Betriebsphase mit gleichbleibend angelegter Polarität im Gleichspannungsmodus durch das Verfahren überwacht und auf einen Maximalwert begrenzt wird.

Ohne eine solche Begrenzung kann es bei einer lange andauernden und zusammenhängenden Gleichspannungs-Betriebsphase zu einem einseitigen Elektrodenabbrand in der Gasentladungslampe 10 kommen, der die Lebensdauer der Gasentladungslampe 10 verkürzen kann. Die Überwachung kann beispielsweise im Steuergerät 14 durch einen Zähler realisiert werden, wobei bei einem Erreichen eines vordefinierten zeitlichen Grenzwerts des Zählerstands die Polarität an den Elektroden 20 und 22 gewechselt wird. Dieser Wechsel findet auch dann statt, wenn die Kriterien zum Umschalten zum Normalbetrieb der Gasentladungslampe 10 im Wechselspannungsbetrieb noch nicht gegeben sind, also die aktuelle Betriebsphase im Gleichspannungsmodus noch nicht beendet ist.

In der Figur 6 wird in der Abfrage 210 eine Zeitdauer einer noch andauernden Betriebsphase mit negativ angelegter Polarität an der beispielhaft angenommenen Elektrode 20 mit dem vordefinierten Grenzwert verglichen. Alternativ wird in der Abfrage 220 eine Zeitdauer einer noch andauernden Betriebsphase mit positiv angelegter Polarität an der Elektrode 20 mit dem vordefinierten Grenzwert verglichen, je nach dem in welchem Pfad sich das Verfahren in Figur 5 gerade befindet. Der vordefinierte Grenzwert kann in beiden Fällen der gleiche sein. Ist der vordefinierte Grenzwert erreicht, wird die Gasentladungslampe 10 mit umgekehrter Polarität (siehe Connector A bzw. B) weiter betrieben.

Bei einem angenommenen Verlauf der fünf Betriebsphasen im Gleichspannungsmodus von Figur 7 zeigt Figur 9 einen dazu korrespondierenden Verlauf der an der beispielhaft angenommenen Elektrode 20 angelegten Polarität P bei Anwendung des dritten Ausführungsbeispiels des erfindungsgemäßen Verfahrens. Der vordefinierte Grenzwert ist in Figur 9 beispielhaft als Wert 4 für den Zählerstand angenommen. Die erste Betriebsphase beginnt mit positiver Polarität an der Elektrode 20. Nach Ablauf von vier Zähltakten, deren Summe mit dem Bezugszeichen 40 bezeichnet ist, ist der vordefinierte Grenzwert erreicht, so dass das Verfahren des dritten Ausführungsbeispiels die Polarität an den Elektroden 20 und 22 wechselt, obwohl die erste Betriebsphase im Gleichspannungsmodus noch nicht beendet ist. Zu Beginn der zweiten Betriebsphase wird die Polarität an den Elektroden 20 und 22 wieder gewechselt, positive Polarität liegt an der Elektrode 20 an.

Nach Ablauf der zweiten Betriebsphase ist der vordefinierte Grenzwert nicht erreicht. Deshalb wird erst zu Beginn der dritten Betriebsphase die Polarität - gemäß des zweiten Ausführungsbeispiels - wieder gewechselt. An die Elektrode 20 wird eine negative Polarität angelegt. Nach Ablauf von vier Zähltakten 40 wird in der dritten Betriebphase die Polarität an der Elektrode 20 wieder gewechselt, obwohl die dritte Betriebsphase im Gleichspannungsmodus noch nicht beendet ist. Die Polarität an den Elektroden 20 und 22 wird in den weiteren Betriebsphasen entsprechend angelegt.

Durch das dritte Ausführungsbeispiel wird also im Gleichspannungsmodus einerseits eine über mehrere Betriebsphasen hinweg zeitlich symmetrische Verteilung der Polaritäten an der Elektrode 20 der Gasentladungslampe 10 und andererseits durch kurze Phasen einer einseitig angelegten Polarität eine optimale Lebensdauer der Gasentladungslampe 10 erreicht.

Der in Figur 6 gezeigte Verfahrensschritt ist im ersten Ausführungsbeispiel des erfindungsgemäßen Verfahrens ebenfalls anwendbar, indem bei einseitig angelegter Polarität nach Erreichen eines vordefinierten zeitlichen Grenzwertes die Polarität vor Beendigung der entsprechenden Betriebphase gewechselt wird (nicht dargestellt), um auch hier einen einseitigen Abbrand der Elektroden der Gasentladungslampe zu verhindern.

Denkbar ist auch ein weiteres Verfahren zum Betreiben mindestens einer Gasentladungslampe eines Kraftfahrzeugscheinwerfers, wobei die mindestens eine Gasentladungslampe in einer ersten Betriebsart mit vergleichsweise höherer Leistung und Wechselspannung und in einer zweiten Betriebsart zeitlich begrenzt mit vergleichsweise geringerer Leistung und Gleichspannung betrieben wird, wobei nach einem Ablauf einer vorbestimmten Zeit in der zweiten Betriebsart die Polarität an den Elektroden der Gasentladungslampe gewechselt wird. Das Wechseln der Polarität geschieht dabei unabhängig von einem Beginn einer neuen Betriebsphase in der zweiten Betriebsart und führt so zu einer exakt symmetrischen Verteilung der Polarität an den Elektroden der Gasentladungslampe.

## Patentansprüche

1. Verfahren zum Betreiben mindestens einer Gasentladungslampe (10) eines Kraftfahrzeugscheinwerfers, wobei die mindestens eine Gasentladungslampe (10) in einer ersten Betriebsart mit vergleichsweise höherer Leistung und Wechselspannung und in einer zweiten Betriebsart zeitlich begrenzt mit vergleichsweise geringerer Leistung und Gleichspannung betrieben wird, **dadurch gekennzeichnet, dass** eine Polarität der Gleichspannung bei einem Wechsel von der ersten zur zweiten Betriebsart in Abhängigkeit von der Polarität der Gleichspannung in wenigstens einer vorhergehenden Betriebsphase der zweiten Betriebsart vorbestimmt wird, wobei zu Beginn jeder neuen Betriebsphase der zweiten Betriebsart die jeweilige Polarität der Gleichspannung im Vergleich zur Polarität in der vorhergehenden Betriebsphase der zweiten Betriebsart gewechselt wird.

2. Verfahren nach Anspruch 1, **dadurch gekennzeichnet, dass** die erste Betriebsart einem Normalbetrieb und die zweite Betriebsart einem Bauteil-Schutzbetrieb entspricht.

3. Verfahren nach Anspruch 1 oder 2, **dadurch gekennzeichnet, dass** eine zeitliche Dauer jeder neuen Betriebsphase in der zweiten Betriebsart ermittelt wird, wobei die jeweilige Polarität der Gleichspannung über mehrere Betriebsphasen der zweiten Betriebsart hinweg symmetrisch verteilt wird.

4. Verfahren nach einem der vorhergehenden Ansprüche, **dadurch gekennzeichnet, dass** eine zeitliche Dauer der Betriebsphase in der zweiten Betriebsart überwacht wird, wobei bei einem Überschreiten einer als maximal definierten Betriebsdauer die jeweilige Polarität der Gleichspannung gewechselt wird.

5. Verfahren nach einem der vorhergehenden Ansprüche, **dadurch gekennzeichnet, dass** der Wechsel von der ersten zur zweiten Betriebsart in Abhängigkeit von einer Innentemperatur einer des Verfahrens ausführenden Steuereinrichtung (13) zum Betreiben der Gasentladungslampe (10) und/oder von einer Verlustleistung der Steuereinrichtung (13) ausgelöst wird.

6. Verfahren nach Anspruch 5, **dadurch gekennzeichnet, dass** der Wechsel von der ersten zur zweiten Betriebsart in Abhängigkeit von einer Umgebungstemperatur der Steuereinrichtung (13) und/oder von einer Bordnetzspannung zum Betreiben der Gasentladungslampe (10) ausgelöst wird.

7. Steuereinrichtung (13), die zum Betreiben einer Gasentladungslampe (10) eines Kraftfahrzeugscheinwerfers eingerichtet ist, um die Gasentladungslampe (10) in einer ersten Betriebsart mit vergleichsweise höherer Leistung und Wechselspannung und in einer zweiten Betriebsart zeitlich begrenzt mit vergleichsweise geringerer Leistung und Gleichspannung zu betreiben, **dadurch gekennzeichnet, dass** die Steuereinrichtung (13) dazu eingerichtet ist, eine Polarität der Gleichspannung bei einem Wechsel von der ersten zur zweiten Betriebsart in Abhängigkeit von der Polarität der Gleichspannung in wenigstens einer vorhergehenden Betriebsphase der zweiten Betriebsart so vorzubestimmen, dass zu Beginn jeder neuen Betriebsphase der zweiten Betriebsart die jeweilige Polarität der Gleichspannung im Vergleich zur Polarität in der vorhergehenden Betriebsphase der zweiten Betriebsart gewechselt wird.

8. Steuereinrichtung (13) nach Anspruch 7, **dadurch gekennzeichnet, dass** sie einen Permanentspeicher aufweist, der dazu eingerichtet ist, eine Historie der Polarität mindestens der letzten Phase im Gleichspannungsmodus abzuspeichern.

9. Steuereinrichtung (13) nach Anspruch 7 oder 8, **dadurch gekennzeichnet, dass** die Steuereinrichtung (13) dazu eingerichtet ist, den Ablauf eines Verfahrens nach einem der Ansprüche 2 bis 7 zu steuern.

10. Steuereinrichtung (13) nach Anspruch 7, 8 oder 9, **dadurch gekennzeichnet, dass** der Steuereinrichtung mindestens ein Sensorelement (36, 38) zur Ermittlung einer Temperatur zugeordnet ist.

## Claims

1. A method for operating at least one gas discharge lamp (10) of a motor vehicle headlight, in which the at least gas discharge lamp (10) is operated in a first mode of operation with comparatively higher power and alternating voltage and in a second mode of operation, for a limited time, at comparatively lower power and direct voltage, **characterized in that** upon a change from the first to the second mode of operation, a polarity of the direct voltage is predetermined as a function of the polarity of the direct voltage in at least one preceding phase of the second mode of operation, and at the beginning of each new phase of the second mode of operation, the polarity of the direct voltage at the time is changed in comparison to the polarity in the preceding phase of the second mode of operation.

2. The method of claim 1, **characterized in that** the first mode of operation correlates with normal operation, and the second mode of operation correlates with a component-sparing mode of operation.

3. The method of claim 1 or 2, **characterized in that** a length of time of each new phase of operation in the second mode of operation is ascertained, and the polarity of the direct voltage at the time is distributed symmetrically over a plurality of phases of the second mode of operation.

4. The method of one of the foregoing claims, **characterized in that** a length of time of the phase of operation in the second mode of operation is monitored, and if a length of operation defined as maximal is exceeded, the polarity of the direct voltage at the time is changed.

5. The method of one of the foregoing claims, **characterized in that** the change from the first to the second mode of operation is tripped as a function of an internal temperature of a control device (13) performing the method for operating the gas discharge lamp (10) and/or as a function of a power loss of the control device (13).

6. The method of claim 5, **characterized in that** the change from the first to the second mode of operation is tripped as a function of an ambient temperature of the control device (13) and/or as a function of an on-board electrical system voltage for operating the gas discharge lamp (10).

7. A control device (13), which is arranged for operating a gas discharge lamp (10) of a motor vehicle headlight, in order to operate the gas discharge lamp (10) in a first mode of operation at comparatively higher power and alternating voltage and in a second mode of operation for a limited time at comparatively lower power and direct voltage, **characterized in that** the control device (13) is arranged such that, upon a change from the first to the second mode of operation, it predetermines a polarity of the direct voltage as a function of the polarity of the direct voltage in at least one preceding phase of the second mode of operation, in such a way that at the beginning of each new phase of the second mode of operation, the polarity of the direct voltage at the time is changed in comparison to the polarity of the preceding phase of the second mode of operation.

8. The control device (13) of claim 7, **characterized in that** it has a permanent memory, which is arranged for storing a history of the polarity of at least the last phase in the direct voltage mode.

9. The control device (13) of claim 7 or 8, **characterized in that** the control device (13) is arranged for controlling the course of a method of one of claims 2 through 7.

10. The control device (13) of claim 7, 8 or 9, **characterized in that** the control device is assigned at least one sensor element (36, 38) for ascertaining a temperature.

## Revendications

1. Procédé de fonctionnement d'au moins une lampe à décharge de gaz (10) d'un phare de véhicule automobile, pour lequel on fait fonctionner l'au moins une lampe à décharge de gaz (10) dans un premier mode de fonctionnement avec une puissance comparativement plus élevée et une tension alternative et temporairement dans un deuxième mode de fonctionnement avec une puissance comparativement plus faible et une tension continue, **caractérisé en ce qu'**une polarité de la tension continue est prédéterminée lors d'un changement du premier mode de fonctionnement au deuxième en fonction de la polarité de la tension continue dans au moins une phase de fonctionnement précédente du deuxième mode de fonctionnement, la polarité respective de la tension continue étant changée au début de chaque nouvelle phase de fonctionnement du deuxième mode de fonctionnement en comparaison de la polarité dans la phase de fonctionnement précédente du deuxième mode de fonctionnement.

2. Procédé selon la revendication 1, **caractérisé en ce que** le premier mode de fonctionnement correspond à un fonctionnement normal et le deuxième mode de fonctionnement à un fonctionnement de protection de composant.

3. Procédé selon la revendication 1 ou 2, **caractérisé en ce qu'**une durée de chaque nouvelle phase de fonctionnement est déterminée dans le deuxième mode de fonctionnement, la polarité respective de la tension continue étant symétriquement répartie sur plusieurs phases de fonctionnement du deuxième mode de fonctionnement.

4. Procédé selon l'une quelconque des revendications précédentes, **caractérisé en ce qu'**une durée de la phase de fonctionnement est surveillée dans le deuxième mode de fonctionnement, la polarité respective de la tension continue étant changée lors d'un dépassement d'une durée de fonctionnement définie comme maximale.

5. Procédé selon l'une quelconque des revendications précédentes, **caractérisé en ce que** le changement du premier mode de fonctionnement au deuxième est déclenché en fonction d'une température intérieure d'un dispositif de commande (13) exécutant le procédé pour faire fonctionner la lampe à décharge de gaz (10) et/ou d'une perte de puissance du dispositif de commande (13).

6. Procédé selon la revendication 5, **caractérisé en ce que** le changement du premier mode de fonctionnement au deuxième est déclenché en fonction d'une température ambiante du dispositif de commande (13) et/ou d'une tension de réseau électrique de bord pour faire fonctionner la lampe à décharge de gaz (10).

7. Dispositif de commande (13) qui est conçu pour faire fonctionner une lampe à décharge de gaz (10) d'un phare de véhicule automobile pour faire fonctionner la lampe à décharge de gaz (10) dans un premier mode de fonctionnement avec une puissance comparativement plus élevée et une tension alternative et temporairement dans un deuxième mode de fonctionnement avec une puissance comparativement plus faible et une tension continue, **caractérisé en ce que** le dispositif de commande (13) est conçu de manière à prédéterminer une polarité de la tension continue lors d'un changement du premier mode de fonctionnement au deuxième en fonction de la polarité de la tension continue dans au moins une phase de fonctionnement précédente du deuxième mode de fonctionnement de telle sorte qu'au début de chaque nouvelle phase de fonctionnement du deuxième mode de fonctionnement, la polarité respective de la tension continue est changée en comparaison de la polarité dans la phase de fonctionnement précédente du deuxième mode de fonctionnement.

8. Dispositif de commande (13) selon la revendication 7, **caractérisé en ce qu'**il comporte une mémoire permanente qui est conçue de manière à mémoriser un historique de la polarité au moins de la dernière phase dans le mode à tension continue.

9. Dispositif de commande (13) selon la revendication 7 ou 8, **caractérisé en ce que** le dispositif de commande (13) est conçu pour commander le déroulement d'un procédé selon l'une quelconque des revendications 2 à 7.

10. Dispositif de commande (13) selon la revendication 7, 8 ou 9, **caractérisé en ce qu'**au moins un élément de détection (36, 38) pour déterminer une température est attribué au dispositif de commande.
